# EUROPEAN PATENT SPECIFICATION

(11) **EP 3 252 940 B1**
(45) Date of publication and mention of the grant of the patent: **10.03.2021**
(21) Application number: 17161731.9
(22) Date of filing: 20.03.2017
(51) Int. Cl.: H02M 7/483

(54) **MODULAR MULTILEVEL CONVERTER AND POWER ELECTRONIC TRANSFORMER**
MODULARER MEHRSTUFIGER WANDLER UND ELEKTRONISCHER LEISTUNGSTRANSFORMATOR
CONVERTISSEUR MULTI-NIVEAUX MODULAIRE ET TRANSFORMATEUR ÉLECTRONIQUE DE PUISSANCE

(30) Priority: 31.05.2016 CN 201610377642
(43) Date of publication of application: 06.12.2017
(73) Proprietor: Siemens Energy Global GmbH & Co. KG, 81739 München (DE)
(72) Inventor: YAO, Ji Long, Beijing, Beijing 100102 (CN); ZHAO, Yan Feng, Beijing, Beijing 100012 (CN); SHI, Lei, Beijing, Beijing 101300 (CN)
(74) Representative: Isarpatent

(56) References cited:
- WO-A1-2007/028349
- DE-A1-102013 009 381
- GLINKA M ET AL: "A New AC/AC Multilevel Converter Family", IEEE TRANSACTIONS ON INDUSTRIAL ELECTRONICS, IEEE SERVICE CENTER, PISCATAWAY, NJ, USA, vol. 52, no. 3, 1 June 2005 (2005-06-01), pages 662-669, XP011133044, ISSN: 0278-0046, DOI: 10.1109/TIE.2005.843973

## Description

### Technical field

The present invention relates to the technical field of transformers, in particular to a modular multilevel converter (MMC) and a power electronic transformer.

### Background art

A transformer is a key apparatus used in a power system. In a power system, after a transformer increases a voltage outputted by a power station, the electricity is transmitted over a long distance, and once it has arrived at its destination, a transformer is used again to reduce the voltage for use by a user. Thus, the transformer is one of the most common and important apparatuses in the entire power system.

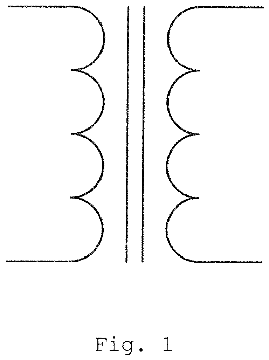

Referring to Fig. 1, a conventional transformer comprises three main parts, namely a core, a primary coil and a secondary coil. The primary coil and secondary coil are wound separately onto the core, the primary coil being connected to a power source, and the secondary coil being connected to a load. The core, which is generally made of iron, provides a magnetic circuit for the primary side and secondary side of the transformer, and isolates the primary side from the secondary side. However, such a transformer is large in volume and heavy, and once the voltage waveform of the primary side is determined, the voltage waveform of the secondary side is also determined, and cannot be controlled; the waveform size, frequency and quality cannot be regulated. Furthermore, such a transformer lacks redundancy; if a problem should occur, it must be shut down to be overhauled.

As user demands change, more and more non-linear loads and harmonic loads are arising; the load demands are ever greater, and are intermittent and diverse in nature. In response to these conditions, power electronic transformers have appeared. An existing power electronic transformer consists of three stages, namely a high-voltage stage, an isolation stage and a low-voltage stage, and employs a modular cascaded structure. In order to make current harmonics on the primary side smaller, a phase-shifting transformer must be added under each cascaded module . However, a phase-shifting transformer has a large volume and a high cost.

Document WO 2007/028349 A1 discloses an apparatus for electrical power transmission. Document DE 10 2013 009 381 A1 discloses a circuit arrangement for transformer-free coupling of AC networks with DC power.

### Content of the invention

In view of the above, the object of the present invention is to propose an MMC and a power electronic transformer with a smaller volume, lower cost and better stability in use. The invention is defined by the appended claims.

The present invention provides an MMC, comprising: a low-frequency AC to DC conversion module, comprising three first branch circuits connected in parallel between output ends, each first branch circuit being formed of multiple IGBT circuit modules connected in series, and an electric coupling point of two adjacent IGBT circuit modules in a middle position of each first branch circuit being connected to a respective voltage input end; each IGBT circuit module being an IGBT half-bridge circuit or an IGBT full-bridge circuit; and a DC to high-frequency AC conversion module, connected between the output ends, the DC to high-frequency AC conversion module comprising two second branch circuits connected in parallel with the output ends, each second branch circuit being formed of multiple IGBT circuit modules connected in series, the DC to high-frequency AC conversion module having multiple sets of output ends, each set of output ends comprising a first output end and a second output end, the first output end being connected to an electric coupling point between adjacent IGBT circuit modules in one of the second branch circuits, and the second output end V₄ being connected to an electric coupling point between adjacent IGBT circuit modules in the other second branch circuit, wherein the number of the first output ends, the second output ends and the outputted voltage values may be set arbitrarily according to actual circumstances.

In a schematic embodiment of the MMC, the IGBT half-bridge circuit comprises a first capacitor C₁, a first IGBT (IGBT₁) and a second IGBT (IGBT₂), the first IGBT (IGBT₁) and the second IGBT (IGBT₂) being connected in series and then connected in parallel with the first capacitor C₁; the collector of the first IGBT (IGBT₁) is connected to a positive terminal of the first capacitor C₁, the emitter of the first IGBT (IGBT₁) is connected to the collector of the second IGBT (IGBT₂) and serves as a first connection terminal, and the emitter of the second IGBT (IGBT₂) is connected to a negative terminal of the first capacitor C₁ and serves as a second connection terminal.

In a schematic embodiment of the MMC, when the IGBT circuit module is an IGBT half-bridge circuit, in the first branch circuits and the second branch circuits, the second connection terminal is connected to the first connection terminal of an adjacent one of the IGBT half-bridge circuits; the first connection terminal of the IGBT half-bridge circuit in a first position is connected to a common end, and the second connection terminal of the IGBT half-bridge circuit in a final position is connected to a common end.

In a schematic embodiment of the MMC, the IGBT full-bridge circuit comprises a second capacitor C₂, a third IGBT (IGBT₃), a fourth IGBT (IGBT₄), a fifth IGBT (IGBT₅) and a sixth IGBT (IGBT₆) ; the third IGBT (IGBT₃) and the fourth IGBT (IGBT₄) are connected in series and then connected in parallel with the second capacitor C₂; the collector of the third IGBT (IGBT₃) is connected to a positive terminal of the second capacitor C₂, the emitter of the third IGBT (IGBT₃) is connected to the collector of the fourth IGBT (IGBT₄) and serves as a third connection terminal, and the emitter of the fourth IGBT (IGBT₄) is connected to a negative terminal of the second capacitor C₂; the fifth IGBT (IGBT₅) and the sixth IGBT (IGBT₆) are connected in series and then connected in parallel with the second capacitor C₂; the collector of the fifth IGBT (IGBT₅) is connected to the positive terminal of the second capacitor C₂, the emitter of the fifth IGBT (IGBT₅) is connected to the collector of the sixth IGBT (IGBT₆) and serves as a fourth connection terminal, and the emitter of the sixth IGBT (IGBT₆) is connected to the negative terminal of the second capacitor C₂.

In a schematic embodiment of the MMC, when the IGBT circuit module is an IGBT full-bridge circuit, in the first branch circuits and the second branch circuits, the third connection terminal is connected to the third connection terminal of an adjacent one of the IGBT full-bridge circuits, and the fourth connection terminal is connected to the fourth connection terminal of an adjacent one of the IGBT full-bridge circuits; the fourth connection terminal of the IGBT full-bridge circuit in a first position is connected to a common end, and the fourth connection terminal of the IGBT full-bridge circuit in a final position is connected to a common end.

In a schematic embodiment of the MMC, the low-frequency AC to DC conversion module also comprises an even number of inductors L, the inductors L being connected in series in middle positions of the branch circuits; moreover, the inductors L are connected in series between two adjacent IGBT circuit modules, and an electric coupling point N₀ in the middle of the even number of inductors L is connected to the voltage input end Vin.

In a schematic embodiment of the MMC, the voltage of the output ends is positive, negative or zero.

The present invention also provides a power electronic transformer, comprising: any one of the MMCs described above.

In a schematic embodiment of the power electronic transformer, a high-frequency transforming module comprises a transformer T₁; the primary coil of the transformer T₁ is connected to the corresponding first output end V₃ and the corresponding second output end V₄, and output ends V₅, V₆ of the secondary coil of the transformer T₁ are connected to a high-frequency AC to low-frequency AC conversion module.

In a schematic embodiment of the power electronic transformer, the high-frequency AC to low-frequency AC conversion module comprises multiple diodes (D₁, D₂, D₃, D₄), a third capacitor C₃ and multiple IGBTs (IGBT₇, IGBT₈, IGBT₉, IGBT₁₀, IGBT₁₁, IGBT₁₂); the diode D₁ and the diode D₂ form a first bridge arm, the diode D₃ and the diode D₄ form a second bridge arm, an electric coupling point between the diode D₁ and the diode D₂ is connected to the output end V₅, and an electric coupling point between the diode D₃ and the diode D₄ is connected to the output end V₆; the IGBT (IGBT₇) and the IGBT (IGBT₈) form a third bridge arm, the IGBT (IGBT₉) and the IGBT (IGBT₁₀) form a fourth bridge arm, the IGBT (IGBT₁₁) and the IGBT (IGBT₁₂) form a fifth bridge arm; the third capacitor C₃, the first bridge arm, the second bridge arm, the third bridge arm, the fourth bridge arm and the fifth bridge arm are connected in parallel; three voltage output ends (Vout) are connected respectively to an electric coupling point between the IGBT (IGBT₇) and the IGBT (IGBT₈), an electric coupling point between the IGBT (IGBT₉) and the IGBT (IGBT₁₀), and an electric coupling point between the IGBT (IGBT₁₁) and the IGBT (IGBT₁₂) .

It can be seen from the solution above that in the MMC and power electronic transformer of the present invention, the low-frequency AC to DC conversion module and the DC to high-frequency AC conversion module both comprise multiple IGBT circuit modules connected in series; the IGBT circuit modules are IGBT half-bridge circuits or IGBT full-bridge circuits. Since IGBT half-bridge circuits or IGBT full-bridge circuits are used, there is no need for a phase-shifting transformer; this helps to reduce volume and costs. Furthermore, the DC to high-frequency AC conversion module has multiple output ends, and the voltage of each output end may be positive, negative or zero; the specific value can be set according to actual demands. When one set of output ends develops a fault, the other output ends can be used normally, with no need for immediate shutdown and overhaul; this helps to lower costs, and increases stability of use.

### Description of the accompanying drawings

Preferred embodiments of the present invention are described in detail below with reference to the accompanying drawings, to give those skilled in the art a clearer understanding of the abovementioned and other features and advantages of the present invention. Drawings:
Fig. 1 is a structural schematic diagram of a conventional transformer.
Fig. 2 is a structural schematic diagram of the power electronic transformer in an embodiment of the present invention.
Fig. 3 is a topological structural diagram of an embodiment of the MMC of the power electronic transformer shown in Fig. 2.
Fig. 4 is a circuit diagram of an embodiment of an IGBT circuit module of the MMC shown in Fig. 3.
Fig. 5 is a circuit diagram of another embodiment of an IGBT circuit module of the MMC shown in Fig. 3.
Fig. 6 is a circuit diagram of an embodiment of the high-frequency transforming module and high-frequency AC to low-frequency AC conversion module of the power electronic transformer shown in Fig. 2.
Fig. 7 is a circuit diagram of an embodiment of the DC to high-frequency AC conversion module of the MMC shown in Fig. 3.
Fig. 8 is a circuit diagram of another embodiment of the DC to high-frequency AC conversion module of the MMC shown in Fig. 3.

The labels used in the abovementioned accompanying drawings are as follows:
- 100: power electronic transformer
- 10: MMC low-frequency AC to DC
- 12: conversion module
- 122: first branch circuit
- 123: IGBT circuit module
- 124: second branch circuit first connection
- 125: terminal second connection
- 126: terminal third connection
- 127: terminal fourth connection
- 128: terminal DC to high-frequency
- 13: AC conversion module high-frequency
- 20: transforming module high-frequency AC to
- 30: low-frequency AC conversion module electric coupling
- N₀, N₁, N₂: points
- Vin: voltage input end
- L: inductor
- IGBT₁∼IGBT₁₂: IGBTs
- C₁: first capacitor
- C₂: second capacitor
- C₃: third capacitor
- V₁, V₂, V₅, V₆: output ends
- V₃: first output end
- V₄: second output end
- D₁, D₂, D₃, D₄: diodes
- T₁: transformer
- Vout: voltage output end

### Particular embodiments

In order to clarify the object, technical solution and advantages of the present invention, the present invention is explained in further detail below by way of embodiments.

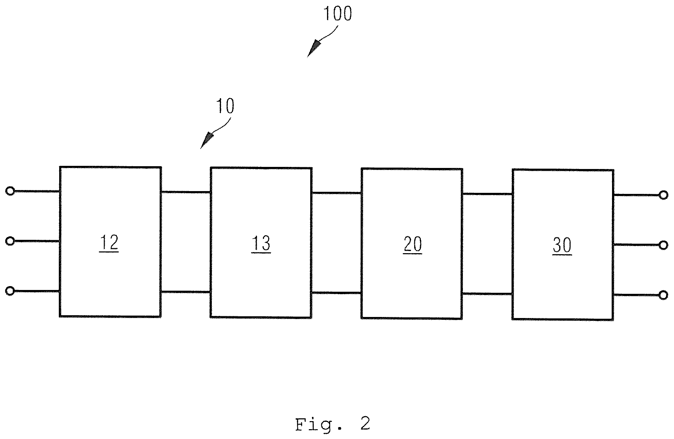

Fig. 2 is a structural schematic diagram of the power electronic transformer in an embodiment of the present invention. Referring to Fig. 2, the power electronic transformer 100 in this embodiment comprises a modular multilevel converter (MMC) 10, multiple high-frequency transforming modules 20 and multiple high-frequency AC to low-frequency AC conversion modules 30, wherein the MMC 10 comprises a low-frequency AC to DC conversion module 12 and a DC to high-frequency AC conversion module 13.

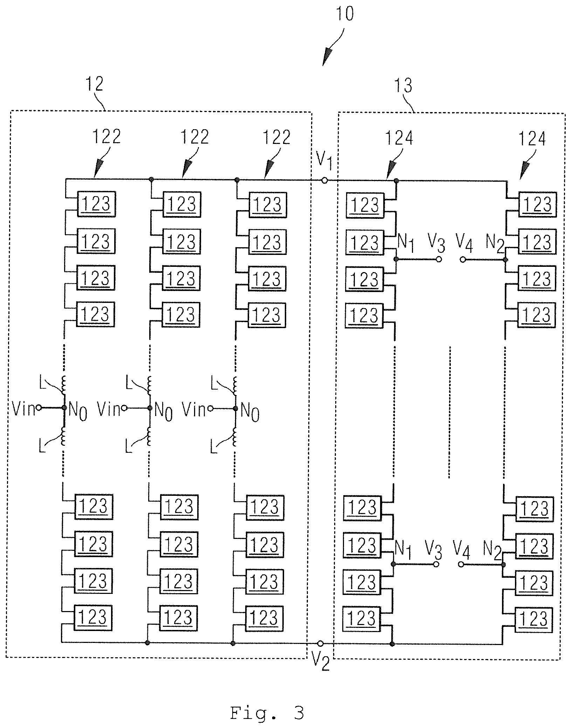

Specifically, Fig. 3 is a topological structural diagram of an embodiment of the MMC of the power electronic transformer shown in Fig. 2. Referring to Fig. 3, the low-frequency AC to DC conversion module 12 comprises three first branch circuits 122 connected in parallel between output ends V₁ and V₂. Each first branch circuit 122 is formed of multiple IGBT circuit modules 123 connected in series, and an electric coupling point N₀ of two adjacent IGBT circuit modules 123 in a middle position of the first branch circuit 122 is connected to a voltage input end Vin. There are three voltage input ends Vin, each corresponding to one phase of three-phase power. IGBT means Insulated Gate Bipolar Transistor. An IGBT is a compound fully-controlled voltage-driven power semiconductor device formed from a BJT (bipolar junction transistor) and a MOS (insulated gate field effect transistor), and combines the advantages of high input impedance of a MOSFET and low conduction voltage drop of a GTR.

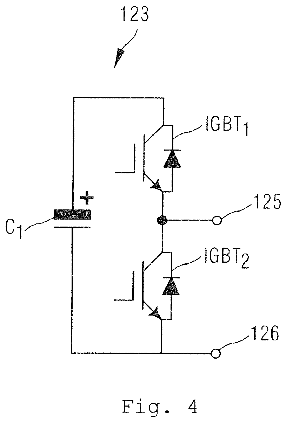

The IGBT circuit module 123 is an IGBT half-bridge circuit or an IGBT full-bridge circuit. Fig. 4 is a circuit diagram of an embodiment of an IGBT circuit module of the MMC shown in Fig. 3. Referring to Fig. 4 too, when the IGBT circuit module 123 is an IGBT half-bridge circuit, the IGBT half-bridge circuit comprises a first capacitor C₁, a first IGBT (IGBT₁) and a second IGBT (IGBT₂) . The first IGBT (IGBT₁) and second IGBT (IGBT₂) are connected in series, and then connected in parallel with the first capacitor C₁. The collector of the first IGBT (IGBT₁) is connected to a positive terminal of the first capacitor C₁, the emitter of the first IGBT (IGBT₁) is connected to the collector of the second IGBT (IGBT₂) and serves as a first connection terminal 125, and the emitter of the second IGBT (IGBT₂) is connected to a negative terminal of the first capacitor C₁ and serves as a second connection terminal 126. The second connection terminal 126 is connected to the first connection terminal 125 of an adjacent IGBT half-bridge circuit.

It must be explained that the electronic elements contained in the IGBT half-bridge circuit, and the connections between the electronic elements, are not restricted to those shown in Fig. 4. The structure of the IGBT half-bridge circuit may be set at will according to actual demands.

The low-frequency AC to DC conversion module 12 also comprises an even number of inductors L. The inductors L are connected in series between the two adjacent IGBT circuit modules 123 in the middle positions of the first branch circuits 122. Moreover, the inductors L are connected in series between the first connection terminal 125 and the second connection terminal 126 adjacent thereto. An electric coupling point in the middle of the even number of inductors L is connected to the voltage input end Vin. In other words, for each first branch circuit 122, the electric coupling point N₀ shown in Fig. 3 is located in the exact middle of the first branch circuit 122, with the electronic components on the first branch circuit 122 being in a symmetrical relationship relative to the electric coupling point N₀. In this embodiment, each first branch circuit 122 comprises two inductors L, which are located above and below the electric coupling point N₀ respectively.

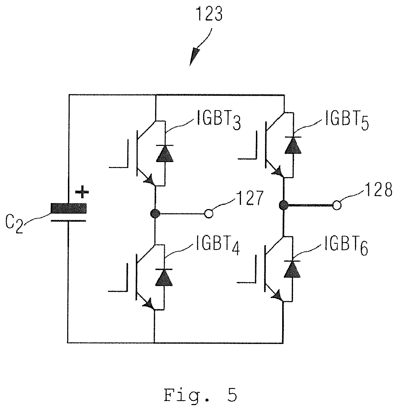

Fig. 5 is a circuit diagram of another embodiment of an IGBT circuit module of the MMC shown in Fig. 3. Referring to Fig. 5 too, when the IGBT circuit module 123 is an IGBT full-bridge circuit, the IGBT full-bridge circuit comprises a second capacitor C₂, a third IGBT (IGBT₃) , a fourth IGBT (IGBT₄) , a fifth IGBT (IGBT₅) and a sixth IGBT (IGBT₆) . The third IGBT (IGBT₃) and fourth IGBT (IGBT₄) are connected in series and then connected in parallel with the second capacitor C₂; the collector of the third IGBT (IGBT₃) is connected to a positive terminal of the second capacitor C₂, and the emitter of the third IGBT (IGBT₃) is connected to the collector of the fourth IGBT (IGBT₄) and serves as a third connection terminal 127. The emitter of the fourth IGBT (IGBT₄) is connected to a negative terminal of the second capacitor C₂. The fifth IGBT (IGBT₅) and sixth IGBT (IGBT₆) are connected in series and then connected in parallel with the second capacitor C₂; the collector of the fifth IGBT (IGBT₅) is connected to the positive terminal of the second capacitor C₂, the emitter of the fifth IGBT (IGBT₅) is connected to the collector of the sixth IGBT (IGBT₆) and serves as a fourth connection terminal 128, and the emitter of the sixth IGBT (IGBT₆) is connected to the negative terminal of the second capacitor C₂.

The DC to high-frequency AC conversion module 13 is connected between output ends V₁ and V₂. The DC to high-frequency AC conversion module 13 comprises two second branch circuits 124 connected in parallel with the output ends V₁ and V₂; each second branch circuit 124 is formed of multiple IGBT circuit modules 123 connected in series. The DC to high-frequency AC conversion module 13 has multiple sets of output ends, each set of output ends comprising a first output end V₃ and a second output end V₄. The first output end V₃ is connected to an electric coupling point N₁ between adjacent IGBT circuit modules 123 in one of the second branch circuits 124; the second output end V₄ is connected to an electric coupling point N₂ between adjacent IGBT circuit modules 123 in the other second branch circuit 124.

In Fig. 3, the first output end V₃ and second output end V₄ in each set of output ends of the DC to high-frequency AC conversion module 13 are disposed symmetrically. For example, in the case of a first set of output ends of the DC to high-frequency AC conversion module 13 shown in Fig. 3, the electric coupling point N₁ connected to the first output end V₃ is an electric coupling point between second and third IGBT circuit modules 123 in one second branch circuit 124, and the electric coupling point N₂ connected to the second output end V₄ is an electric coupling point between second and third IGBT circuit modules 123 in the other second branch circuit 124. However, the present invention is not limited to this; the first output end V₃ and second output end V₄ in each set of output ends may be disposed asymmetrically.

It must be explained that when the IGBT circuit module 123 is an IGBT half-bridge circuit, in the first branch circuits 122 and second branch circuits 124, a second connection terminal 126 is connected to a first connection terminal 125 of an adjacent IGBT half-bridge circuit; the first connection terminal 125 of the IGBT half-bridge circuit in a first position is connected to a common end, and the second connection terminal 126 of the IGBT half-bridge circuit in a final position is connected to a common end.

When the IGBT circuit module 123 is an IGBT full-bridge circuit, in the first branch circuits 122 and second branch circuits 124, a third connection terminal 127 is connected to a third connection terminal 127 of an adjacent IGBT full-bridge circuit, and a fourth connection terminal 128 is connected to a fourth connection terminal 128 of an adjacent IGBT full-bridge circuit; the fourth connection terminal 128 of the IGBT full-bridge circuit in a first position is connected to a common end, and the fourth connection terminal 128 of the IGBT full-bridge circuit in a final position is connected to a common end.

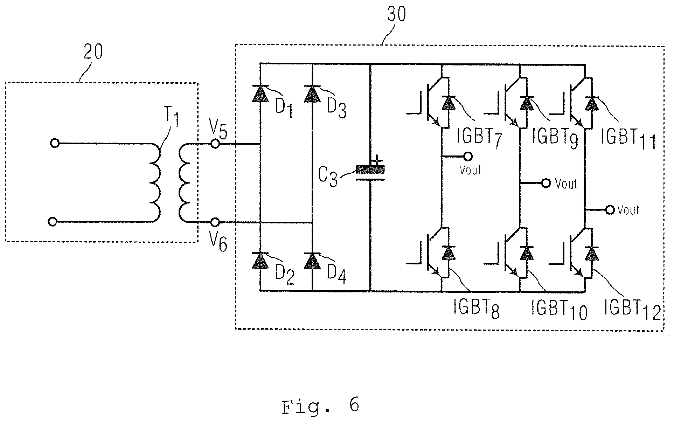

Fig. 6 is a circuit diagram of an embodiment of the high-frequency transforming module and high-frequency AC to low-frequency AC conversion module of the power electronic transformer shown in Fig. 2. Referring to Fig. 5, the high-frequency transforming module 20 comprises a transformer T₁. The primary coil of the transformer T₁ is connected to a corresponding first output end V₃ and corresponding second output end V₄, while output ends V₅ and V₆ of the secondary coil of the transformer T₁ are connected to the high-frequency AC to low-frequency AC conversion module 30.

The high-frequency AC to low-frequency AC conversion module 30 comprises multiple diodes D₁, D₂, D₃ and D₄, a third capacitor C₃ and multiple IGBTs (IGBT₇, IGBT₈, IGBT₉, IGBT₁₀, IGBT₁₁ and IGBT₁₂). Diode D₁ and diode D₂ form a first bridge arm, while diode D₃ and diode D₄ form a second bridge arm. An electric coupling point between diode D₁ and diode D₂ is connected to output end V₅, while an electric coupling point between diode D₃ and diode D₄ is connected to output end V₆. The IGBT (IGBT₇) and the IGBT (IGBT₈) form a third bridge arm, the IGBT (IGBT₉) and the IGBT (IGBT₁₀) form a fourth bridge arm, the IGBT (IGBT₁₁) and the IGBT (IGBT₁₂) form a fifth bridge arm. The third capacitor C₃, first bridge arm, second bridge arm, third bridge arm, fourth bridge arm and fifth bridge arm are connected in parallel. Three voltage output ends Vout are connected respectively to an electric coupling point between the IGBT (IGBT₇) and the IGBT (IGBT₈), an electric coupling point between the IGBT (IGBT₉) and the IGBT (IGBT₁₀), and an electric coupling point between the IGBT (IGBT₁₁) and the IGBT (IGBT₁₂) .

During operation, when the IGBT circuit module 123 is an IGBT half-bridge circuit, since the three first branch circuits 122 of the low-frequency AC to DC conversion module 12 comprise multiple IGBT half-bridge circuits, when three-phase power is inputted via the voltage input ends Vin, low-frequency AC power can be converted to DC power through the on/off switching of the first IGBT (IGBT₁) and the second IGBT (IGBT₂) , and the DC power is outputted via the output ends V₁ and V₂. The DC power is inputted via the output ends V₁ and V₂ to the DC to high-frequency AC conversion module 13. The DC to high-frequency AC conversion module 13 comprises two second branch circuits 124 connected in parallel, each second branch circuit 124 being formed of multiple IGBT half-bridge circuits connected in series. In each IGBT half-bridge circuit, when the first IGBT (IGBT₁) is conducting, the second IGBT (IGBT₂) is shut off; the voltage between the first connection terminal 125 and second connection terminal 126 is then equal to the voltage of the first capacitor C₁, so the output voltage is greater than 0. When the first IGBT (IGBT₁) is shut off, the second IGBT (IGBT₂) is conducting; there is a short circuit between the first connection terminal 125 and second connection terminal 126, so the output voltage is equal to 0.

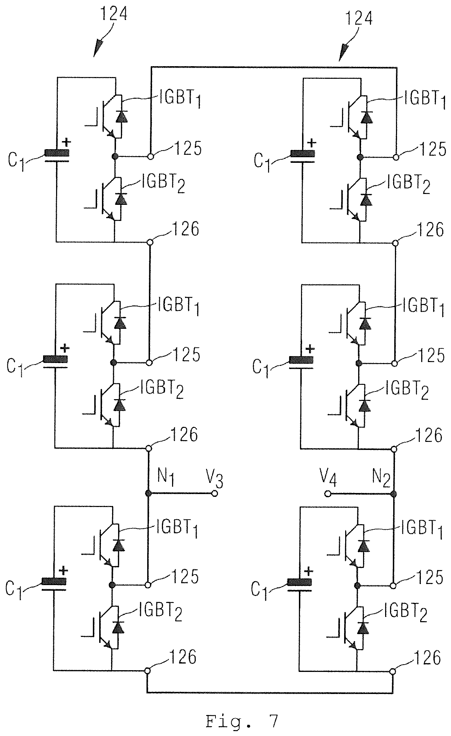

Please refer to Figs. 7 and 3. Taking Fig. 7 as an example, each second branch circuit 124 comprises three IGBT half-bridge circuits, wherein the second connection terminals 126 of the bottommost two IGBT half-bridge circuits are both connected to a common end, and the voltage between the first output end V₃ and second output end V₄ is the voltage between the first output end V₃ and the common end, less the voltage between the second output end V₄ and the common end. When the first IGBT (IGBT₁) of the bottommost IGBT half-bridge circuit in the left-hand second branch circuit 124 is conducting, and the second IGBT (IGBT₂) is shut off, the voltage between the first output end V₃ and the common end is greater than 0; when the first IGBT (IGBT₁) of the bottommost IGBT half-bridge circuit in the left-hand second branch circuit 124 is shut off, and the second IGBT (IGBT₂) is conducting, the voltage between the first output end V₃ and the common end is equal to 0. By the same principle, when the first IGBT (IGBT₁) of the bottommost IGBT half-bridge circuit in the right-hand second branch circuit 124 is conducting, and the second IGBT (IGBT₂) is shut off, the voltage between the first output end V₄ and the common end is greater than 0; when the first IGBT (IGBT₁) of the bottommost IGBT half-bridge circuit in the right-hand second branch circuit 124 is shut off, and the second IGBT (IGBT₂) is conducting, the voltage between the first output end V₄ and the common end is equal to 0. Thus, by adjusting the voltage between the first output end V₃ and the common end and the voltage between the second output end V₄ and the common end, the voltage between the first output end V₃ and the second output end V₄ can be controlled to be positive, negative or zero.

During operation, when the IGBT circuit module 123 is an IGBT full-bridge circuit, since the three first branch circuits 122 of the low-frequency AC to DC conversion module 12 each comprise multiple IGBT full-bridge circuits, when three-phase power is inputted via the voltage input ends Vin, low-frequency AC power can be converted to DC power through the on/off switching of the IGBTs, and the DC power is outputted via the output ends V₁ and V₂. The DC power is inputted to the DC to high-frequency AC conversion module 13 via the output ends V₁ and V₂. The DC to high-frequency AC conversion module 13 comprises two second branch circuits 124 connected in parallel, each second branch circuit 124 being formed of multiple IGBT full-bridge circuits connected in series. In each IGBT full-bridge circuit , when the fourth IGBT (IGBT₄) and fifth IGBT (IGBT₅) are conducting, and the third IGBT (IGBT₃) and sixth IGBT (IGBT₆) are shut off, the voltage between the fourth connection terminal 128 and third connection terminal 127 is greater than 0. When the fourth IGBT (IGBT₄) and fifth IGBT (IGBT₅) are shut off, and the third IGBT (IGBT₃) and sixth IGBT (IGBT₆) are conducting, the voltage between the fourth connection terminal 128 and third connection terminal 127 is less than 0.

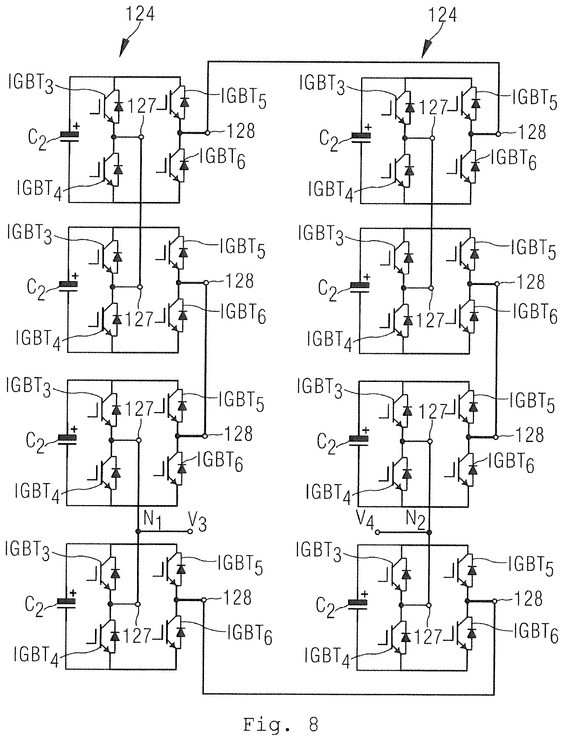

Please refer to Figs. 8 and 3. Taking Fig. 8 as an example, each second branch circuit 124 comprises three IGBT full-bridge circuits, wherein the fourth connection terminals 128 of the bottommost two IGBT full-bridge circuits are both connected to a common end, and the voltage between the first output end V₃ and second output end V₄ is the voltage between the first output end V₃ and the common end, less the voltage between the second output end V₄ and the common end. In the bottommost IGBT full-bridge circuit of the left-hand second branch circuit 124, the first output end V₃ is connected to the third connection terminal 127, while the fourth connection terminal 128 is connected to the common end; in the bottommost IGBT full-bridge circuit of the right-hand second branch circuit 124, the second output end V₄ is connected to the third connection terminal 127, while the fourth connection terminal 128 is connected to the common end. Since the voltage between the fourth connection terminal 128 and third connection terminal 127 of each IGBT full-bridge circuit can be greater than 0 or less than 0, the voltage obtained by subtracting the voltage between the second output end V₄ and the common end from the voltage between the first output end V₃ and the common end may be positive, negative or zero, i.e. the voltage between the first output end V₃ and the second output end V₄ may be positive, negative or zero.

Furthermore, the DC to high-frequency AC conversion module 13 converts DC power to high-frequency AC power. It must be explained that the number of output ends V₃ and V₄ and the outputted voltage values may be set arbitrarily according to actual circumstances. When the IGBT circuit module 123 is an IGBT full-bridge circuit, a positive, negative or zero output end voltage can be achieved if the DC to high-frequency AC conversion module 13 comprises only one second branch circuit 124.

The high-frequency transforming module 20 performs high-voltage isolation on the high-frequency AC power outputted by output ends V₃ and V₄. Finally, the high-frequency AC to low-frequency AC conversion module 30 converts high-frequency AC power outputted by output ends V₅ and V₆ of the high-frequency transforming module 20 to low-frequency AC power, and outputs this low-frequency AC power via the voltage output ends Vout.

The MMC and power electronic transformer of the present invention at least have the following advantages:
1. In the MMC and power electronic transformer of the present invention, the low-frequency AC to DC conversion module and the DC to high-frequency AC conversion module both comprise multiple IGBT circuit modules connected in series; the IGBT circuit modules are IGBT half-bridge circuits or IGBT full-bridge circuits. Since IGBT half-bridge circuits or IGBT full-bridge circuits are used, there is no need for a phase-shifting transformer; this helps to reduce volume and costs. Furthermore, the DC to high-frequency AC conversion module has multiple output ends, and the voltage of each output end may be positive, negative or zero; the specific value can be set according to actual demands. When one set of output ends develops a fault, the other output ends can be used normally, with no need for immediate shutdown and overhaul; this helps to lower costs, and increases stability of use.
2. In one embodiment of the MMC and power electronic transformer of the present invention, inductors L are connected in series in a middle position of each branch circuit. Moreover, the inductors L are connected in series between the first connection terminal and the second connection terminal adjacent thereto. Electric coupling points N₀ in the middle of the even number of inductors L are connected to the voltage input ends Vin, thereby making the input voltage more stable.
3. In one embodiment of the MMC and power electronic transformer of the present invention, when the IGBT circuit module is an IGBT half-bridge circuit or an IGBT full-bridge circuit, on the one hand, the low-frequency AC to DC conversion module can convert low-frequency AC power to DC power effectively; on the other hand, the output end voltage of the DC to high-frequency AC conversion module may be positive, negative or zero, so use is convenient and flexible, and adjustments may be made according to actual circumstances, to meet different demands of users.

The embodiments above are merely preferred embodiments of the present invention, which are not intended to limit it.

## Claims

1. A modular multilevel converter (MMC) (10), comprising:
a low-frequency AC to DC conversion module (12), comprising three first branch circuits (122) connected in parallel between output ends (V₁, V₂), each first branch circuit (122) being formed of multiple IGBT circuit modules (123) connected in series, and a first
electric coupling point (N₀) of two adjacent IGBT circuit modules (123) in a middle position of each first branch circuit (122) being connected to a respective voltage input end (Vin) ; each IGBT circuit module (123) being an IGBT half-bridge circuit or an IGBT full-bridge circuit; and
a DC to high-frequency AC conversion module (13), connected between the output ends (V₁, V₂), the DC to high-frequency AC conversion module (13) comprising two second branch circuits (124) connected in parallel with the output ends (V₁, V₂), each second branch circuit (124) being formed of multiple IGBT circuit modules (123) connected in series, the DC to high-frequency AC conversion module (13) having multiple sets of output ends, each set of output ends comprising a first output end (V₃) and a second output end (V₄), the first output end (V₃) being connected to a second electric coupling point (N₁) between
adjacent IGBT circuit modules (123) in one of the second branch circuits (124), and the second output end (V₄) being connected to a third electric coupling point (N₂) between adjacent IGBT circuit modules (123) in the other second branch circuit (124), wherein a number of the first output ends (V₃), the second output ends (V₄) and outputted voltage values may be set arbitrarily according to actual circumstances.

2. The MMC (10) as claimed in claim 1, **characterized in that** the IGBT half-bridge circuit comprises a first capacitor (C₁), a first IGBT (IGBT₁) and a second IGBT (IGBT₂), the first IGBT (IGBT₁) and the second IGBT (IGBT₂) being connected in series and then connected in parallel with the first capacitor (C₁) ; the collector of the first IGBT (IGBT₁) is connected to a positive terminal of the first capacitor (C₁), the emitter of the first IGBT (IGBT₁) is connected to the collector of the second IGBT (IGBT₂) and serves as a first connection terminal (125), and the emitter of the second IGBT (IGBT₂) is connected to a negative terminal of the first capacitor (C₁) and serves as a second connection terminal (126).

3. The MMC (10) as claimed in claim 2, **characterized in that** when the IGBT circuit module (123) is an IGBT half-bridge circuit, in the first branch circuits (122) and the second branch circuits (124), the second connection terminal (126) is connected to the first connection terminal (125) of an adjacent one of the IGBT half-bridge circuits; the first connection terminal (125) of the IGBT half-bridge circuit in a first position is connected to a common end, and the second connection terminal (126) of the IGBT half-bridge circuit in a final position is connected to a common end.

4. The MMC (10) as claimed in claim 1, **characterized in that** the IGBT full-bridge circuit comprises a second capacitor (C₂), a third IGBT (IGBT₃) , a fourth IGBT (IGBT₄) , a fifth IGBT (IGBT₅) and a sixth IGBT (IGBT₆) ; the third IGBT (IGBT₃) and the fourth IGBT (IGBT₄) are connected in series and then connected in parallel with the second capacitor (C₂); the collector of the third IGBT (IGBT₃) is connected to a positive terminal of the second capacitor (C₂), the emitter of the third IGBT (IGBT₃) is connected to the collector of the fourth IGBT (IGBT₄) and serves as a third connection terminal (127), and the emitter of the fourth IGBT (IGBT₄) is connected to a negative terminal of the second capacitor (C₂); the fifth IGBT (IGBT₅) and the sixth IGBT (IGBT₆) are connected in series and then connected in parallel with the second capacitor (C₂); the collector of the fifth IGBT (IGBT₅) is connected to the positive terminal of the second capacitor (C₂), the emitter of the fifth IGBT (IGBT₅) is connected to the collector of the sixth IGBT (IGBT₆) and serves as a fourth connection terminal (128), and the emitter of the sixth IGBT (IGBT₆) is connected to the negative terminal of the second capacitor (C₂).

5. The MMC (10) as claimed in claim 4, **characterized in that** when the IGBT circuit module (123) is an IGBT full-bridge circuit, in the first branch circuits (122) and the second branch circuits (124), the third connection terminal (127) is connected to the third connection terminal (127) of an adjacent one of the IGBT full-bridge circuits, and the fourth connection terminal (128) is connected to the fourth connection terminal (128) of an adjacent one of the IGBT full-bridge circuits; the fourth connection terminal (128) of the IGBT full-bridge circuit in a first position is connected to a common end, and the fourth connection terminal (128) of the IGBT full-bridge circuit in a final position is connected to a common end.

6. The MMC (10) as claimed in claim 1, **characterized in that** the low-frequency AC to DC conversion module (12) also comprises an even number of inductors (L), the inductors (L) being connected in series in middle positions of the branch circuits (122) ; moreover, the inductors (L) are connected in series between two adjacent IGBT circuit modules (123), and an electric coupling point (N₀) in the middle of the even number of inductors (L) is connected to the voltage input end (Vin).

7. The MMC (10) as claimed in claim 1, **characterized in that** the voltage of the output ends is positive, negative or zero.

8. A power electronic transformer (100), **characterized by** comprising the MMC (10) as claimed in any one of claims 1 to 7.

9. The power electronic transformer (100) as claimed in claim 8, **characterized in that** it further comprises a high-frequency transforming module (20) and a high-frequency AC to low-frequency AC conversion module (30); wherein the high-frequency transforming module (20) comprises a transformer (T₁); the primary coil of the transformer (T₁) is connected to the corresponding first output end (V₃) and the corresponding second output end (V₄), and output ends (V₅, V₆) of the secondary coil of the transformer (T₁) are connected to the high-frequency AC to low-frequency AC conversion module (30).

10. The power electronic transformer (100) as claimed in claim 9, **characterized in that** the high-frequency AC to low-frequency AC conversion module (30) comprises first, second, third and fourth diodes (D₁, D₂, D₃, D₄), a third capacitor (C₃) and seventh, eighth, ninth, tenth, eleventh and twelfth IGBTs (IGBT₇, IGBT₈, IGBT₉, IGBT₁₀, IGBT₁₁, IGBT₁₂); the first diode (D₁) and the second diode (D₂) form a first bridge arm, the third diode (D₃) and the fourth diode (D₄) form a second bridge arm, an electric coupling point between the first diode (D₁) and the second diode (D₂) is connected to one of the output ends of the secondary coil of the transformer (V₅), and an electric coupling point between the third diode (D₃) and the fourth diode (D₄) is connected to the other output end of the secondary coil of the transformer (V₆); the seventh IGBT (IGBT₇) and the eighth IGBT (IGBT₈) form a third bridge arm, the ninth IGBT (IGBT₉) and the tenth IGBT (IGBT₁₀) form a fourth bridge arm, the eleventh IGBT (IGBT₁₁) and the twelfth IGBT (IGBT₁₂) form a fifth bridge arm; the third capacitor (C₃), the first bridge arm, the second bridge arm, the third bridge arm, the fourth bridge arm and the fifth bridge arm are connected in parallel; three voltage output ends (Vout) are connected respectively to an electric coupling point between the seventh IGBT (IGBT₇) and the eighth IGBT (IGBT₈), an electric coupling point between the ninth IGBT (IGBT₉) and the tenth IGBT (IGBT₁₀), and an electric coupling point between the eleventh IGBT (IGBT₁₁) and the twelfth IGBT (IGBT₁₂) .

## Patentansprüche

1. Modularer mehrstufiger Wandler (MMC) (10), umfassend:
ein Niederfrequenz-AC-DC-Umwandlungsmodul (12), das drei erste Zweigstromkreise (122) umfasst, die zwischen Ausgangsenden (V₁, V₂) parallel geschaltet sind, wobei jeder erste Zweigstromkreis (122) aus mehreren IGBT-Schaltungsmodulen (123) gebildet ist, die in Reihe geschaltet sind, und ein erster elektrischer Kopplungspunkt (N₀) von zwei benachbarten IGBT-Schaltungsmodulen (123) in einer Mittelposition jedes ersten Zweigstromkreises (122) mit einem jeweiligen Spannungseingangsende (Vin) verbunden ist; wobei jedes IGBT-Schaltungsmodul (123) eine IGBT-Halbbrückenschaltung oder eine IGBT-Vollbrückenschaltung ist; und
ein DC-Hochfrequenz-AC-Umwandlungsmodul (13), das zwischen die Ausgangsenden (V₁, V₂) geschaltet ist, wobei das DC-Hochfrequenz-AC-Umwandlungsmodul (13) zwei zweite Zweigstromkreise (124) umfasst, die zu den Ausgangsenden (V₁, V₂) parallel geschaltet sind, jeder zweite Zweigstromkreis (124) aus mehreren IGBT-Schaltungsmodulen (123) gebildet ist, die in Reihe geschaltet sind, das DC-Hochfrequenz-AC-Umwandlungsmodul (13) mehrere Sätze von Ausgangsenden aufweist, jeder Satz von Ausgangsenden ein erstes Ausgangsende (V₃) und zweites Ausgangsende (V₄) umfasst, das erste Ausgangsende (V₃) mit einem zweiten elektrischen Kopplungspunkt (N₁) zwischen benachbarten IGBT-Schaltungsmodulen (123) in einem der zweiten Zweigstromkreise (124) verbunden ist, und das zweite Ausgangsende (V₄) mit einem dritten elektrischen Kopplungspunkt (N₂) zwischen benachbarten IGBT-Schaltungsmodulen (123) im anderen zweiten Zweigstromkreis (124) verbunden ist, wobei eine Anzahl der ersten Ausgangsenden (V₃), der zweiten Ausgangsenden (V₄) und von ausgegebenen Spannungswerten gemäß tatsächlichen Umständen beliebig festgelegt werden kann.

2. MMC (10) nach Anspruch 1, **dadurch gekennzeichnet, dass** die IGBT-Halbbrückenschaltung einen ersten Kondensator (C₁), einen ersten IGBT (IGBT₁) und einen zweiten IGBT (IGBT₂) umfasst, der erste IGBT (IGBT₁) und der zweite IGBT (IGBT₂) in Reihe geschaltet sind und dann zum ersten Kondensator (C₁) parallel geschaltet sind; der Kollektor der ersten IGBTs (IGBT₁) mit einer Plusklemme des ersten Kondensators (C₁) verbunden ist, der Emitter des ersten IGBTs (IGBT₁) mit dem Kollektor des zweiten IGBTs (IGBT₂) verbunden ist und als eine erste Anschlussklemme (125) dient, und der Emitter des zweiten IGBTs (IGBT₂) mit einer Minusklemme des ersten Kondensators (C₁) verbunden ist und als eine zweite Anschlussklemme (126) dient.

3. MMC (10) nach Anspruch 2, **dadurch gekennzeichnet, dass**, wenn das IGBT-Schaltungsmodul (123) in den ersten Zweigstromkreisen (122) und den zweiten Zweigstromkreisen (124) eine IGBT-Halbbrückenschaltung ist, die zweite Anschlussklemme (126) mit der ersten Anschlussklemme (125) einer benachbarten der IGBT-Halbbrückenschaltungen verbunden ist; die erste Anschlussklemme (125) der IGBT-Halbbrückenschaltung in einer ersten Position mit einem gemeinsamen Ende verbunden ist, und die zweite Anschlussklemme (126) der IGBT-Halbbrückenschaltung in einer Endposition mit einem gemeinsamen Ende verbunden ist.

4. MMC (10) nach Anspruch 1, **dadurch gekennzeichnet, dass** die IGBT-Vollbrückenschaltung einen zweiten Kondensator (C₂), einen dritten IGBT (IGBT₃), einen vierten IGBT (IGBT₄), einen fünften IGBT (IGBT₅) und einen sechsten IGBT (IGBT₆) umfasst; der dritte IGBT (IGBT₃) und der vierte IGBT (IGBT₄) in Reihe geschaltet sind und dann zum zweiten Kondensator (C₂) parallel geschaltet sind; der Kollektor des dritten IGBTs (IGBT₃) mit einer Plusklemme des zweiten Kondensators (C₂) verbunden ist, der Emitter des dritten IGBTs (IGBT₃) mit dem Kollektor des vierten IGBTs (IGBT₄) verbunden ist und als eine dritte Anschlussklemme (127) dient, und der Emitter des vierten IGBTs (IGBT₄) mit einem Minuspol des zweiten Kondensators (C₂) verbunden ist; der fünfte IGBT (IGBT₅) und der sechste IGBT (IGBT₆) in Reihe geschaltet sind und dann zum zweiten Kondensator (C₂) parallel geschaltet sind; der Kollektor des fünften IGBTs (IGBT₅) mit der Plusklemme des zweiten Kondensators (C₂) verbunden ist, der Emitter des fünften IGBTs (IGBT₅) mit dem Kollektor des sechsten IGBTs (IGBT₆) verbunden ist und als eine vierte Anschlussklemme (128) dient, und der Emitter des sechsten IGBTs (IGBT₆) mit dem Minuspol des zweiten Kondensators (C₂) verbunden ist.

5. MMC (10) nach Anspruch 4, **dadurch gekennzeichnet, dass**, wenn das IGBT-Schaltungsmodul (123) in den ersten Zweigstromkreisen (122) und den zweiten Zweigstromkreisen (124) und eine IGBT-Vollbrückenschaltung ist, die dritte Anschlussklemme (127) mit der dritten Anschlussklemme (127) einer benachbarten der IGBT-Vollbrückenschaltungen verbunden ist, und die vierte Anschlussklemme (128) mit der vierten Anschlussklemme (128) einer benachbarten der IGBT-Vollbrückenschaltungen verbunden ist; die vierte Anschlussklemme (128) der IGBT-Vollbrückenschaltung in einer ersten Position mit einem gemeinsamen Ende verbunden ist, und die vierte Anschlussklemme (128) der IGBT-Vollbrückenschaltung in einer Endposition mit einem gemeinsamen Ende verbunden ist.

6. MMC (10) nach Anspruch 1, **dadurch gekennzeichnet, dass** das Niederfrequenz-AC-DC-Umwandlungsmodul (12) außerdem eine gerade Anzahl von Induktoren (L) umfasst, wobei die Induktoren (L) in Mittelpositionen der Zweigstromkreise (122) in Reihe geschaltet sind; die Induktoren (L) außerdem zwischen zwei benachbarten IGBT-Schaltungsmodulen (123) in Reihe geschaltet sind, und ein elektrischer Kopplungspunkt (N₀) in der Mitte der geraden Anzahl von Induktoren (L) mit dem Spannungseingangsende (Vin) verbunden ist.

7. MMC (10) nach Anspruch 1, **dadurch gekennzeichnet, dass** die Spannung der Ausgangsenden positiv, negativ oder null ist.

8. Leistungselektronischer Transformator (100), **dadurch gekennzeichnet, dass** er den MMC (10) nach einem der Ansprüche 1 bis 7 umfasst.

9. Leistungselektronischer Transformator (100) nach Anspruch 8, **dadurch gekennzeichnet, dass** er ferner ein Hochfrequenztransformationsmodul (20) und ein Hochfrequenz-AC-Niederfrequenz-AC-Umwandlungsmodul (30) umfasst; wobei das Hochfrequenztransformationsmodul (20) einen Transformator (T₁) umfasst; die Primärspule des Transformators (T₁) mit dem entsprechenden ersten Ausgangsende (V₃) und dem entsprechenden zweiten Ausgangsende (V₄) verbunden ist, und Ausgangsenden (V₅, V₆) der Sekundärspule des Transformators (T₁) mit dem Hochfrequenz-AC-Niederfrequenz-AC-Umwandlungsmodul (30) verbunden sind.

10. Leistungselektronischer Transformator (100) nach Anspruch 9, **dadurch gekennzeichnet, dass** das Hochfrequenz-AC-Niederfrequenz-AC-Umwandlungsmodul (30) eine erste, zweite, dritte und vierte Diode (D₁, D₂, D₃, D₄), einen dritten Kondensator (C₃) und einen siebten, achten, neunten, zehnten, elften und zwölften IGBT (IGBT₇, IGBT₈, IGBT₉, IGBT₁₀, IGBT₁₁, IGBT₁₂) umfasst; die erste Diode (D₁) und die zweite Diode (D₂) einen ersten Brückenarm bilden, die dritte Diode (D₃) und die vierte Diode (D₄) einen zweiten Brückenarm bilden, ein elektrischer Kopplungspunkt zwischen der ersten Diode (D₁) und der zweiten Diode (D₂) mit einem der Ausgangsenden der Sekundärspule des Transformators (V₅) verbunden ist, und ein elektrischer Kopplungspunkt zwischen der dritten Diode (D₃) und der vierten Diode (D₄) mit dem anderen Ausgangsende der Sekundärspule des Transformators (V₆) verbunden ist; der siebte IGBT (IGBT₇) und der achte IGBT (IGBT₈) einen dritten Brückenarm bilden, der neunte IGBT (IGBT₉) und der zehnte IGBT (IGBT₁₀) einen vierten Brückenarm bilden, und der der elfte IGBT (IGBT₁₁) und der zwölfte IGBT (IGBT₁₂) einen fünften Brückenarm bilden;
der dritte Kondensator (C₃), der erste Brückenarm, der zweite Brückenarm, der dritte Brückenarm, der vierte Brückenarm und der fünfte Brückenarm parallel geschaltet sind; drei Spannungsausgangsenden (Vout) jeweils mit einem elektrischen Kopplungspunkt zwischen dem siebten IGBT (IGBT₇) und dem achten IGBT (IGBT₈), ein elektrischer Kopplungspunkt zwischen dem neunten IGBT (IGBT₉) und dem zehnten IGBT (IGBT₁₀) und einem elektrischen Kopplungspunkt zwischen dem elften IGBT (IGBT₁₁) und dem zwölften IGBT (IGBT₁₂) verbunden sind.

## Revendications

1. Convertisseur modulaire multiniveaux (MMC) (10) comprenant :
un module de conversion alternatif basse fréquence vers continu (12) comprenant trois premiers circuits de branche (122) reliés en parallèle entre des extrémités de sortie (V₁, V₂), chaque premier circuit de branche (122) étant formé de multiples modules de circuits IGBT (123) reliés en série, et
un premier point de couplage électrique (N₀) de deux modules adjacents de circuits IGBT (123) au milieu de chaque premier circuit de branche (122) relié à une entrée respective de tension (Vin), chaque module de circuit IGBT (123) étant un circuit IGBT en demi pont ou un circuit IGBT en pont complet, et
un module de conversion continu vers alternatif haute fréquence (13) relié entre les extrémités de sortie (V₁, V₂), le module de conversion continu vers alternatif haute fréquence (13) comprenant deux seconds circuits de branche (124) reliés en parallèle avec les extrémités de sortie (V₁, V₂), chaque second circuit de branche (124) étant formé de multiples modules de circuits IGBT (123) reliés en série, le module de conversion continu vers alternatif haute fréquence (13) comportant de multiples jeux d'extrémités de sortie, chaque jeu d'extrémités de sortie comprenant une première extrémité de sortie (V₃) et une seconde extrémité de sortie (V₄), la première extrémité de sortie (V₃) étant reliée à un deuxième point de couplage électrique (N₁) entre des modules adjacents de circuits IGBT (123) dans l'un des seconds circuits de branche (124) et la seconde extrémité de sortie (V₄) étant reliée à un troisième point de couplage électrique (N₂) entre des modules adjacents de circuits IGBT (123) dans l'autre second circuit de branche (124), dans lequel :
le nombre de premières extrémités de sortie (V₃), de secondes extrémités de sortie (V₄) et de valeurs de tension en sortie peut être défini arbitrairement en fonction des circonstances réelles.

2. Convertisseur MMC (10) selon la revendication 1, **caractérisé en ce que** le circuit IGBT en demi pont comprend un premier condensateur (C₁) un premier transistor IGBT (IGBT₁) et un deuxième transistor IGBT (IGBT₂), le premier transistor IGBT (IGBT₁) et le deuxième transistor IGBT (IGBT₂) étant reliés en série puis reliés en parallèle avec le premier condensateur (C₁) ; le collecteur du premier transistor IGBT (IGBT₁) est relié à la borne positive du premier condensateur (C₁), l'émetteur du premier transistor IGBT (IGBT₁) est relié au collecteur du deuxième transistor IGBT (IGBT₂) et sert de première borne de connexion (125), et l'émetteur du second transistor IGBT (IGBT₂) est relié à la borne négative du premier condensateur (C₁) et sert de deuxièmes borne de connexion (126).

3. Convertisseur MMC (10) selon la revendication 2, **caractérisé en ce que** lorsque le module de circuit IGBT (123) est un circuit IGBT en demi pont, dans les premiers circuits de branche (122) et dans les seconds circuits de branche (124) la deuxième borne de connexion (126) est reliée à la première borne de connexion (125) d'un circuit adjacent parmi les circuits IGBT en demi pont ; la première borne de connexion (125) du circuit IGBT en demi pont, dans une première position, est reliée à une terminaison commune, et la deuxième borne de connexion (126) du circuit IGBT en demi pont, en position finale, est reliée à une terminaison commune.

4. Convertisseur MMC (10) selon la revendication 1, **caractérisé en ce que** le circuit IGBT en pont complet comprend un deuxième condensateur (C₂), un troisième transistor IGBT (IGBT₃), un quatrième transistor IGBT (IGBT₄), un cinquième transistor IGBT (IGBT₅) et un sixième transistor IGBT (IGBT₆) ; le troisième transistor IGBT (IGBT₃) et le quatrième transistor IGBT (IGBT₄) sont reliés en série puis reliés en parallèle avec le deuxième condensateur (C₂) ; le collecteur du troisième transistor IGBT (IGBT₃) est relié à la borne positive du deuxième condensateur (C₂), l'émetteur du troisième transistor IGBT (IGBT₃) est relié au collecteur du quatrième transistor IGBT (IGBT₄) et sert de troisième borne de connexion (127), et l'émetteur du quatrième transistor IGBT (IGBT₄) est relié à la borne négative du deuxième condensateur (C₂) ; le cinquième transistor IGBT (IGBT₅) et le sixième transistor IGBT (IGBT₆) sont reliés en série puis reliés en parallèle avec le deuxième condensateur (C₂) ; le collecteur du cinquième transistor IGBT (IGBT₅) est relié à la borne positive du deuxième condensateur (C₂), l'émetteur du cinquième transistor IGBT (IGBT₅) est relié au collecteur du sixième transistor IGBT (IGBT₆) et sert de quatrième borne de connexion (128) et l'émetteur du sixième transistor IGBT (IGBT₆) est relié à la borne négative du deuxième condensateur (C₂).

5. Convertisseur MMC (10) selon la revendication 4, **caractérisé en ce que**, lorsque le module de circuit IGBT (123) est un circuit IGBT en pont entier, dans les premiers circuits de branche (122) et dans les seconds circuits de branche (124), la troisième borne de connexion (127) est reliée à la troisième borne de connexion (127) d'un circuit adjacent parmi les circuits IGBT en pont entier et la quatrième borne de connexion (128) est reliée à la quatrième borne de connexion (128) d'un circuit adjacent parmi les circuits IGBT en pont entier ; la quatrième borne de connexion (128) du circuit IGBT en pont entier, dans une troisième position, est reliée à une terminaison commune, et la quatrième borne de connexion (128) du circuit IGBT en pont entier, en position finale, est reliée à une terminaison commune.

6. Convertisseur MMC (10) selon la revendication 1, **caractérisé en ce que** le module de conversion alternatif basse fréquence vers continu (12) comprend également un nombre impair de bobines d'inductance (L), les bobines d'inductance (L) étant reliées en série aux positions médianes des circuits de branche (122) ; de plus les bobines d'inductance (L) sont reliées en série entre deux modules adjacents de circuits IGBT (123), et un point de couplage électrique (N₀) au milieu du nombre impair de bobines d'inductance (L) est relié à l'entrée en tension (Vin).

7. Convertisseur MMC (10) selon la revendication 1, **caractérisé en ce que** la tension des terminaisons de sortie est positive, négative ou nulle.

8. Transformateur électronique de puissance (100) **caractérisé en ce qu'**il comprend le convertisseur MMC (10) conforme à l'une quelconque des revendications 1 à 7.

9. Transformateur électronique de puissance (100) selon la revendication 8, **caractérisé en ce qu'**il comprend en outre un module de transformation haute fréquence (20) et un module de conversion alternatif haute fréquence vers alternatif basse fréquence (30) ; dans lequel le module de transformation haute fréquence (20) comprend un transformateur (T₁) ; le primaire du transformateur (T₁) et relié à la première terminaison de sortie (V₃) correspondante et à la seconde terminaison de sortie (V₄) correspondante, et les sorties (V₅, V₆) du secondaire du transformateur (T₁) sont reliées au module de conversion alternatif haute fréquence vers alternatif basse fréquence (30).

10. Transformateur électronique de puissance (100) selon la revendication 9, **caractérisé en ce que** le module de conversion alternatif haute fréquence vers alternatif basse fréquence (30) comprend des première, deuxième, troisième et quatrième diodes (D₁, D₂, D₃, D₄), un troisième condensateur (C₃) et des septième, huitième, neuvième, dixième, onzième et douzième transistors IGBT (IGBT₇, IGBT₈, IGBT₉, IGBT₁₀, IGBT₁₁, IGBT₁₂); la première diode (D₁) et la deuxième diode (D₂) forment un premier bras de pont, la troisième diode (D₃) et la quatrième diode (D₄) forment un deuxième bras de pont, un point de couplage électrique entre la première diode (D₁) et la deuxième diode (D₂) est relié à l'une des terminaisons de sortie du secondaire du transformateur (V₅), et un point de couplage électrique entre la troisième diode (D₃) et la quatrième diode (D₄) est relié à l'autre terminaison de sortie du secondaire du transformateur (V₆) ; le septième transistor IGBT (IGBT₇) et le huitième transistor IGBT (IGBT₈) forment un troisième bras de pont, le neuvième transistor IGBT (IGBT₉) et le dixième transistor IGBT (IGBT₁₀) forment un quatrième bras de pont, le onzième transistor IGBT (IGBT₁₁) et le douzième transistor IGBT (IGBT₁₂) forment un cinquième bras de pont ;
le troisième condensateur (C₃), le premier bras de pont, deuxième bras de pont, le troisième bras de pont, le quatrième bras de pont et le cinquième bras de pont sont reliés en parallèle ; trois sorties de tension (Vout) sont reliées respectivement à un point de couplage électrique entre le septième transistor IGBT (IGBT₇) et le huitième transistor IGBT (IGBT₈), à un point de couplage électrique entre le neuvième transistor IGBT (IGBT₉) et le dixième transistor IGBT (IGBT₁₀) et à un point de couplage électrique entre le onzième transistor IGBT (IGBT₁₁) et le douzième transistor IGBT (IGBT₁₂).
